# EUROPEAN PATENT APPLICATION

(11) **EP 2 712 153 A2**
(43) Date of publication of application: **26.03.2014**
(21) Application number: 11777288.9
(22) Date of filing: 21.07.2011
(51) Int. Cl.: H04M 1/725

(54) **WIRELESS WIDEBAND DEVICE**

(71) Applicant: Huawei Device Co., Ltd., Longgang District Shenzhen Guangdong 518129 (CN)
(72) Inventor: LIU, Guangsheng, Guangdong 518129 (CN); ZHANG, Zongwei, Guangdong 518129 (CN); LIANG, Qinghai, Guangdong 518129 (CN); HAO, Huaqi, Guangdong 518129 (CN); WANG, Fengxin, Guangdong 518129 (CN)
(74) Representative: Körber, Martin Hans
(86) International application number: PCT/CN2011/077426
(87) International publication number: WO 2011/137869

(57) **Abstract**

A wireless broadband device includes: a main body and an end cover, where the main body and the end cover being assembled to form a whole; a first battery is carried in the main body and configured to supply power to a circuit of the main body, so as to enable the main body to implement a wireless broadband function; a second battery is built in the end cover, where a power output contact of the second battery emerges from an inner side of the end cover; the inner side of the end cover contacts the main body; and the power output contact of the second battery contacts an exposed power input contact point of the circuit of the main body, and when an output voltage of the first battery is smaller than the minimum required voltage for supplying power to the circuit of the main body, the circuit of the main body switches to the second battery for power supply. The wireless broadband device has a long power supply duration, which brings good user experience.

## Description

### TECHNICAL FIELD

The present invention relates to the field of communications technologies, and in particular to a wireless broadband device.

### BACKGROUND

In the communications field, a wireless broadband device is also called a mobile broadband device, and is currently an Internet access medium widely applied on a communications network. Within an effective coverage range of a wireless broadband device, a terminal (such as a mobile phone and a computer) may access a network through Wireless Fidelity (Wireless Fidelity, WIFI) to implement wireless Internet access. Common wireless broadband devices mainly include three types, namely, a Wideband Code Division Multiple Access (Wideband Code Division Multiple Access, WCDMA) mobile broadband device, a Code Division Multiple Access 2000 (Code Division Multiple Access 2000) mobile broadband device, and a Time Division-Synchronous Code Division Multiple Access (Time Division-Synchronous Code Division Multiple Access, TD-SCDMA) mobile broadband device.

An existing wireless broadband device carries one battery to supply power to a circuit, so as to enable the wireless broadband device to implement a wireless broadband function. However, it is found in practice that, the power supply capacity of one battery is very low, resulting in a short working duration of the mobile broadband device. A user needs to charge a battery or replace a battery frequently, causing poor user experience.

### SUMMARY

Embodiments of the present invention provide a wireless broadband device, where the wireless broadband device has a long power supply duration, which brings good user experience.

A wireless broadband device includes:
a main body and an end cover, where the main body and the end cover are assembled to form a whole;
the main body carries a first battery, which is configured to supply power to a circuit of the main body, so as to enable the main body to implement a wireless broadband function;
the end cover is internally disposed with a second battery, where a power output contact of the second battery emerges from an inner side of the end cover, and the inner side of the end cover contacts the main body; and
the power output contact of the second battery contacts an exposed power input contact point of the circuit of the main body, and when an output voltage of the first battery is smaller than a minimum required voltage for supplying power to the circuit of the main body, the circuit of the main body switches to the second battery for power supply.

In the embodiment of the present invention, a first battery is carried in a main body included in a wireless broadband device and serves as a main battery to supply power to a circuit of the main body, so as to enable the main body to implement a wireless broadband function; a second battery is built in an end cover and a power output contact of the second battery emerges from an inner side of the end cover. When the main body and the end cover are assembled to form a whole, the inner side of the end cover contacts the main body, and the power output contact of the second battery contacts an exposed power input contact point of the circuit of the main body. When an output voltage of the first battery is smaller than a minimum required voltage for supplying power to the circuit of the main body, the circuit of the main body switches to the second battery for power supply. The wireless broadband device provided in the embodiment of the present invention supplies power to the circuit of the main body by using the first battery carried in the main body and the second battery built in the end cover. In comparison, the wireless broadband device provided in the embodiment of the present invention has a longer power supply duration, and the wireless broadband device is easily portable, which brings good user experience.

### BRIEF DESCRIPTION OF DRAWINGS

To describe the technical solutions in the embodiments of the present invention or in the prior art more clearly, the following briefly introduces accompanying drawings required for describing the embodiments. Apparently, the accompanying drawings in the following description show merely some embodiments of the present invention, and a person of ordinary skill in the art may still derive other drawings according to these accompanying drawings without creative efforts.
FIG. 1 is a schematic assembly diagram of a wireless broadband device according to an embodiment of the present invention;
FIG. 2 is a stereoscopic schematic diagram of a wireless broadband device shown in FIG. 1;
FIG. 3 is a schematic structural diagram of a main body included in the wireless broadband device shown in FIG. 1;
FIG. 4 is a schematic structural diagram of an end cover included in the wireless broadband device shown in FIG. 1; and

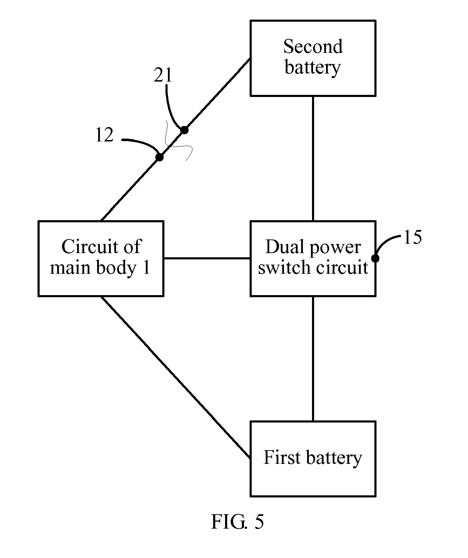

FIG. 5 is a schematic structural diagram of a circuit of the wireless broadband device shown in FIG. 1.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

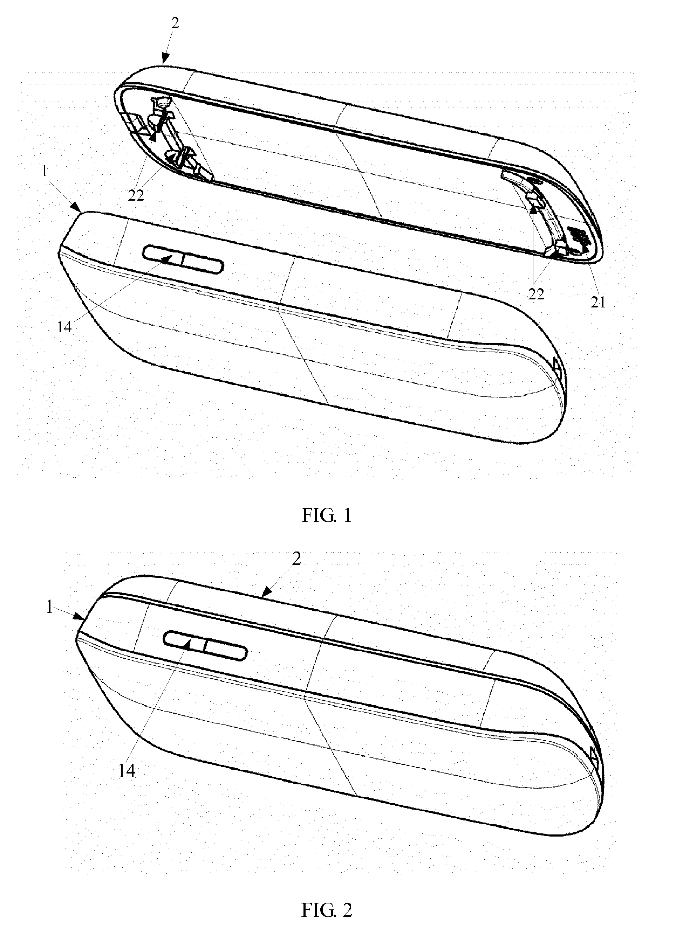

As shown in FIG. 1 to FIG. 4, a wireless broadband device provided in the embodiment of the present invention may include:
a main body 1 and an end cover 2, where the main body 1 and the end cover 2 are assembled to form a whole, as shown in FIG. 2;
the main body 1 carries a first battery (not shown in the figure), which is configured to supply power to a circuit of the main body 1, so as to enable the main body 1 to implement a wireless broadband function;
the end cover 2 is internally disposed with a second battery (not shown in the figure), where a power output contact 21 of the second battery emerges from an inner side of the end cover 2 (as shown in FIG. 1), and the inner side of the end cover 2 contacts the main body 1; and
the power output contact 21 of the second battery contacts an exposed power input contact point 12 of the circuit of the main body 1, and when an output voltage of the first battery is smaller than a minimum required voltage for supplying power to the circuit of the main body 1, the circuit of the main body 1 switches to the second battery for power supply.

In the wireless broadband device provided in this embodiment of the present invention, when the main body 1 is separated from the end cover 2, the main body 1 may also be separately used, thereby implementing a wireless broadband function.

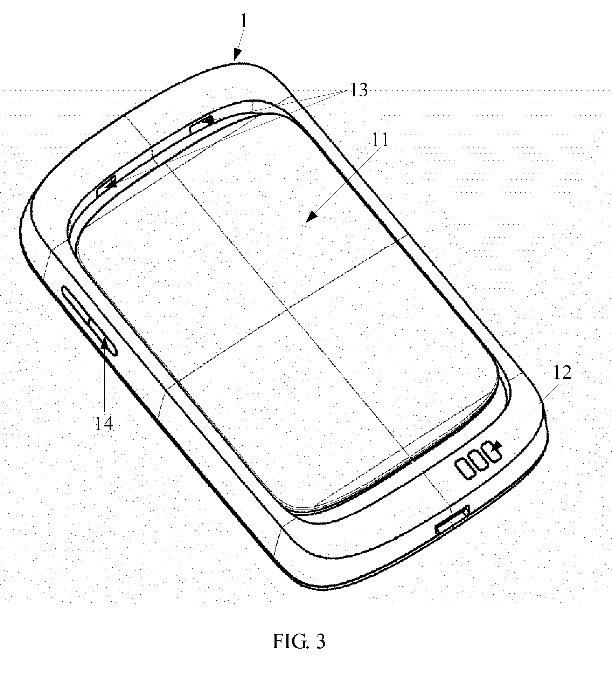

In an embodiment, the main body 1 may also be disposed with a removable battery cover 11, as shown in FIG. 3, where the battery cover 11 is configured to cover the first battery carried in the main body 1, thereby protecting the first battery.

The battery cover 11 is removable, and therefore the first battery in the battery cover 11 may be conveniently replaced. In another embodiment of the present invention, when the main body 1 and the end cover 2 are assembled, it does not need to remove the battery cover 11.

In an embodiment, the main body 1 and the end cover 2 may be assembled to form a whole in a manner of a snap joint, as shown in FIG. 1, FIG. 3, and FIG. 4, where a snap pin 22 disposed on the end cover 2 and a snap joint 13 disposed on the main body 1 may match each other, so that the main body 1 and the end cover 2 are assembled to form a whole.

In an embodiment, the main body 1 and the end cover 2 may also be assembled to form a whole in a manner of magnet attraction. For example, one or more magnets may be embedded in a surface of the main body 1 that contacts the end cover 2, and one or more magnets may also be embedded in the inner side of the end cover 2. Generally, the magnets embedded in the surface of the main body 1 and the magnets embedded in the inner side of the end cover 2 may be equal in quantity, correspond vertically in position, and be opposite in polarity, so that the main body 1 and the end cover 2 may be assembled to form a whole in a manner of magnet attraction.

In the embodiment of the present invention, a method of assembling the main body 1 and the end cover 2 to form a whole in a manner of magnet attraction is simple and practical, so that the main body 1 and the end cover 2 are assembled and disassembled easily and rapidly.

In an embodiment, a layout of the magnets embedded in the surface of the main body 1 that contacts the end cover 2 may match the layout of the magnets embedded in the inner side of the end cover 2, so that the main body 1 and the end cover 2 may be assembled to form a whole in a manner of magnet attraction in a direction of installation, while in an opposite direction of installation, the main body 1 and the end cover 2 cannot be assembled to form a whole because of repulsion between like poles of magnets, thereby achieving an effect of preventing installation in an opposite direction.

In an embodiment, the main body 1 and the end cover 2 may also be assembled to form a whole in a manner of a guide rail; or, the main body 1 and the end cover 2 are assembled to form a whole in a manner of rotation, to which it is not limited by the embodiment of the present invention.

In an embodiment, the end cover 2 and the second battery may be an integral structure, similar to a battery cover with a cell for a mobile phone. Or, as shown in FIG. 1, FIG. 3, and FIG. 4, the end cover 2 and the second battery may also be a removable structure, that is, the second battery is built in the end cover 2, and is covered by the inner side of the end cover 2.

As shown in FIG. 1, FIG. 2, and FIG. 3, a power switch 14 is disposed on a side of the main body 1 and is configured to turn on or off the power supply to the circuit of the main body 1.

In an actual application, when the wireless broadband device works normally, a power supply voltage range of the circuit of the main body 1 is generally 3.4 V to 4.2 V. When the output voltage of the first battery of the main battery is smaller than the minimum required voltage, namely, 3.4 V, for supplying power to the circuit of the main body 1, the circuit of the main body 1 may switch to the second battery for power supply, so that a power supply duration of the wireless broadband device may be increased, and the number of recharging times and a frequency of battery replacement by a user are decreased.

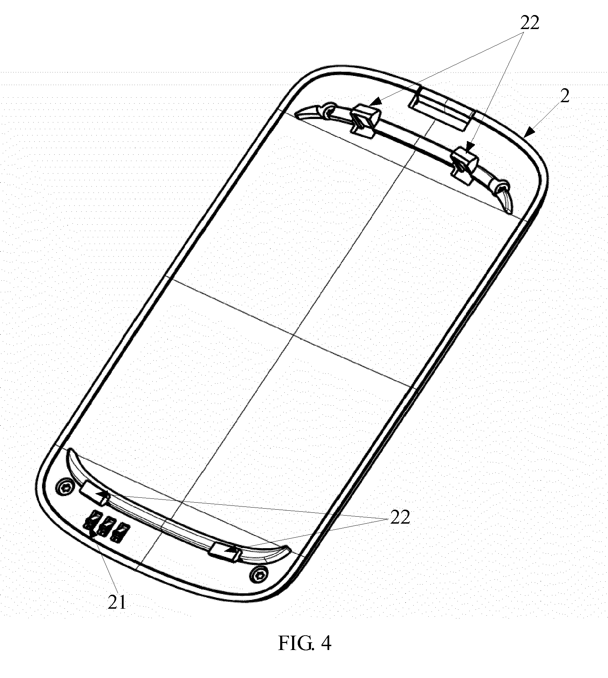

In the foregoing wireless broadband device, a dual power switch circuit 15 may be disposed in the main body 1, where the dual power switch circuit 15 electrically connects to the circuit of the main body 1, the first battery, and the second battery, respectively. FIG. 4 is a schematic diagram of the dual power switch circuit 15 electrically connecting to the circuit of the main body 1, the first battery, and the second battery, respectively. When the output voltage of the first battery is smaller than the minimum required voltage for supplying power to the circuit of the main body 1, the dual power switch circuit 15 may switch the circuit of the main body 1 to the second battery for power supply. For example, when detecting that the output voltage of the first battery is smaller than the minimum required voltage, namely, 3.4 V, for supplying power to the circuit of the main body 1, the dual power switch circuit 15 disconnects a circuit loop formed by the dual power switch circuit 15, the first battery, and the circuit of the main body 1, and instead connects a circuit loop formed by the dual power switch circuit 15, the second battery, and the circuit of the main body 1, so as to switch the circuit of the main body 1 to the second battery for power supply.

In a practical application, various types of dual power switch circuits 15 are available. For example, a power P-PET controller LTC4414 may be used to build a dual power switch circuit, so as to implement switching of power supply between the first battery and the second battery for the circuit of the main body 1, to which it is not limited by the embodiment of the present invention. A specific implementation process of using a power P-PET controller LTC4414 to build a dual power switch circuit is common knowledge of a person of skill in the art, and therefore is not described in detail in the embodiment of the present invention. Certainly, another component may also be used to build a dual power switch circuit to implement the present invention, to which it is not limited by the embodiment of the present invention.

In the embodiment of the present invention, the wireless broadband device may be a mobile WIFI hotspot device, may also be a WCDMA mobile broadband device, a CDMA2000 mobile broadband device, or a TD-SCDMA mobile broadband device, and may also be other high-end data cards, as long as these high-end data cards may connect to a network side through a radio link in an uplink direction and may connect to a communications terminal through a WIFI link in a downlink direction to enable the communications terminal to access a network. The mobile broadband device includes, but is not limited to, a wireless Internet terminal.

In the embodiment of the present invention, a first battery is carried in a main body included in a wireless broadband device and serves as a main battery to supply power to a circuit of the main body, so as to enable the main body to implement a wireless broadband function; a second battery is built in an end cover and a power output contact of the second battery emerges from an inner side of the end cover. When the main body and the end cover are assembled to form a whole, the inner side of the end cover contacts the main body, and the power output contact of the second battery contacts an exposed power input contact point of the circuit of the main body. When an output voltage of the first battery is smaller than a minimum required voltage for supplying power to the circuit of the main body, the circuit of the main body switches to the second battery for power supply. The wireless broadband device provided in the embodiment of the present invention supplies power to the circuit of the main body by using the first battery carried in the main body and the second battery built in the end cover. In comparison, the wireless broadband device provided in the embodiment of the present invention has a longer power supply duration, and the wireless broadband device is easily portable, which brings good user experience.

The wireless broadband device provided in the embodiments of the present invention is described in detail in the foregoing. The principle and implementation manner of the present invention are described herein by using specific examples. The description about the embodiments of the present invention is merely provided for ease of understanding of the method and core ideas of the present invention. A person of ordinary skill in the art can make variations to the present invention in terms of specific implementation manner and application scope according to the ideas of the present invention. Therefore, the content of the specification shall not be construed as a limit to the present invention.

## Claims

1. A wireless broadband device, comprising:
a main body (1) and an end cover (2), wherein the main body (1) and the end cover (2) are assembled to form a whole;
the main body (1) carries a first battery, which is configured to supply power to a circuit of the main body (1), so as to enable the main body (1) implement a wireless broadband function;
the end cover (2) is internally disposed with a second battery, wherein a power output contact (21) of the second battery emerges from an inner side of the end cover (2), and the inner side of the end cover (2) contacts the main body (1); and
the power output contact (21) of the second battery contacts an exposed power input contact point (12) of the circuit of the main body (1), and when an output voltage of the first battery is smaller than a minimum required voltage for supplying power to the circuit of the main body (1), the circuit of the main body (1) switches to the second battery for power supply.

2. The wireless broadband device according to claim 1, wherein,
the main body (1) and the end cover (2) are assembled to form a whole in a manner of a snap joint.

3. The wireless broadband device according to claim 1, wherein,
the main body (1) and the end cover (2) are assembled to form a whole in a manner of magnet attraction.

4. The wireless broadband device according to claim 1, wherein,
the main body (1) and the end cover (2) are assembled to form a whole in a manner of a guide rail.

5. The wireless broadband device according to claim 1, wherein,
the main body (1) and the end cover (2) are assembled to form a whole in a manner of rotation.

6. The wireless broadband device according to claim 1, wherein,
the end cover (2) and the second battery are an integral structure.

7. The wireless broadband device according to claim 1, wherein,
the end cover (2) and the second battery are a removable structure.

8. The wireless broadband device according to claim 1, wherein,
a removable battery cover (11) is also disposed on the main body (1) to cover the first battery carried in the main body (1).

9. The wireless broadband device according to claim 1, wherein,
a power switch (14) is disposed on a side of the main body (1) to turn on or off supply of power to the circuit of the main body (1).

10. The wireless broadband device according to any one of claims 1 to 9, wherein,
a dual power switch circuit (15) is also disposed in the main body (1), wherein the dual power switch circuit (15) electrically connects to the circuit of the main body (1), the first battery, and the second battery, respectively; when an output voltage of the first battery is smaller than the minimum required voltage for supplying power to the circuit of the main body (1), the dual power switch circuit (15) switches the circuit of the main body (1) to the second battery for power supply.

11. The wireless broadband device according to any one of claims 1 to 9, wherein the wireless broadband device is a mobile WIFI hotspot device.
